# FASCICULE DE BREVET EUROPEEN

(11) **EP 1 607 582 B1**
(45) Date de publication et mention de la délivrance du brevet: **15.08.2007**
(21) Numéro de dépôt: 05291184.9
(22) Date de dépôt: 02.06.2005
(51) Int. Cl.: F01D 9/04, F01D 25/24

(54) **Montage de chambre de combustion de turbine à gaz avec distributeur intégré de turbine haute pression**
Aufhängung einer Gasturbinenbrennkammer mit integriertem Turbinenleitapparat
Mounting of a gas turbine combustor with integrated turbine inlet guide conduit

(30) Priorité: 17.06.2004 FR 0406595
(43) Date de publication de la demande: 21.12.2005
(73) Titulaire: SNECMA, 75015 Paris (FR)
(72) Inventeur: Aumont, Caroline, 75012 Paris (FR); Conette, Eric, 33700 Merignac (FR); De Sousa, Mario César, 77240 Cesson la Foret (FR); Hernandez, Didier Hippolyte, 77720 Quiers (FR)
(74) Mandataire: Joly, Jean-Jacques

(56) Documents cités:
- EP-A1- 0 161 203
- EP-A2- 1 152 191
- DE-A1- 4 323 706
- FR-A- 692 826
- FR-A- 2 825 780
- FR-A1- 2 728 016
- FR-A1- 2 825 787
- FR-A1- 2 831 600
- GB-A- 1 089 660
- US-A- 2 420 135

## Description

### Arrière plan de l'invention

L'invention se rapporte aux turbines à gaz notamment pour moteurs d'avion ou turbines industrielles. Elle concerne plus particulièrement un montage de chambre à combustion avec distributeur de turbine haute pression intégré.

Dans une turbine à gaz comportant une chambre de combustion annulaire, il a déjà été proposé de monter le distributeur de turbine haute pression (HP) constituant l'étage d'entrée de la turbine en le reliant mécaniquement à une partie d'extrémité aval de la chambre de combustion (dans toute la demande les termes amont et aval sont utilisés avec référence à la direction d'écoulement du flux gazeux dans la chambre et le distributeur). L'ensemble formé par la chambre de combustion et le distributeur de turbine HP peut alors être supporté par des viroles de liaison reliées à des enveloppes métalliques interne et externe.

Une telle disposition permet d'assurer une meilleure continuité de la veine d'écoulement du flux gazeux à l'interface entre chambre de combustion et distributeur de turbine et permet aussi d'assurer plus facilement l'étanchéité au niveau de cette interface, en comparaison avec une disposition dans laquelle la chambre de combustion et le distributeur de turbine HP sont reliés séparément aux enveloppes métalliques interne et externe.

Une chambre de combustion avec distributeur de turbine intégré à sa partie d'extrémité aval est montrée dans le document FR 2 825 787. La chambre de combustion est en matériau composite à matrice céramique (CMC) et l'ensemble chambre de combustion/distributeur de turbine HP sectorisé est maintenu entre les enveloppes métalliques interne et externe au moyen de viroles de liaison métalliques souples qui sont sectorisées pour permettre une adaptation aux déplacements relatifs dûs à des importantes différences entre les coefficients de dilatation du métal et du matériau composite céramique.

L'intégration du distributeur de turbine HP à la chambre de combustion, si elle présente les avantages cités plus haut, pose toutefois le problème suivant. Le distributeur de turbine HP comprend une pluralité d'aubes fixes situées dans la veine d'écoulement du flux gazeux. L'effort en rotation induit par le flux gazeux sur les aubes est repris par les viroles de liaison qui doivent être dimensionnées à cet effet tout en conservant le cas échéant une capacité de déformation lorsqu'elles relient des éléments en des matériaux ayant des coefficients de dilatation très différents.

### Objet et résumé de l'invention

L'invention a pour but d'apporter une solution à ce problème et propose, à cet effet, une turbine à gaz comportant :
- une chambre de combustion annulaire,
- un distributeur de turbine haute pression ayant une pluralité d'aubes fixes réparties autour d'un axe confondu avec celui de la chambre de combustion, le distributeur de turbine étant relié mécaniquement à une partie d'extrémité aval de la chambre de combustion,
- des enveloppes métalliques interne et externe entre lesquelles est logé l'ensemble formé par la chambre de combustion et le distributeur de turbine, et
- des viroles de liaison interne et externe reliant l'ensemble chambre de combustion/distributeur de turbine respectivement aux enveloppes métalliques interne et externe afin de maintenir ledit ensemble entre les enveloppes,
turbine dans laquelle, conformément à l'invention, sont en outre prévus des moyens de blocage en rotation du distributeur de turbine autour de son axe par rapport à au moins une des enveloppes métalliques, pour éviter que les efforts exercés sur les aubes du distributeur de turbine par le flux gazeux issu de la chambre soient repris par les parties des viroles de liaison qui s'étendent entre l'ensemble chambre de combustion/distributeur de turbine et les enveloppes métalliques.

Ainsi, les viroles de liaison peuvent être conçues pour simplement assurer le maintien de l'ensemble chambre de combustion/distributeur de turbine HP entre les enveloppes métalliques, n'ayant pas à supporter d'efforts circonférentiels ou de cisaillement.

Avantageusement les moyens de blocage comportent des éléments de blocage coopérant avec une partie de paroi solidaire d'une enveloppe métallique et une bride solidaire du distributeur de turbine. La partie de paroi solidaire d'une enveloppe métallique peut alors être en forme de bride radiale. En particulier, les éléments de blocage peuvent agir sur une bride radiale solidaire d'une enveloppe métallique et une bride radiale solidaire du distributeur de turbine entre lesquelles est logé un joint d'étanchéité annulaire, et peuvent alors comporter des tiges axiales de retenue du joint d'étanchéité.

Selon un mode de réalisation particulier, la bride radiale solidaire du distributeur de turbine est portée par une virole de liaison à une extrémité de celle-ci fixée au distributeur de turbine.

Avantageusement, afin de répartir au mieux les efforts, des premiers éléments de blocage sont prévus agissant entre une bride radiale solidaire de l'enveloppe métallique interne et une bride radiale interne solidaire du distributeur de turbine et des seconds éléments de blocage sont prévus agissant entre une bride radiale solidaire de l'enveloppe métallique externe et une bride radiale externe solidaire du distributeur de turbine.

Avantageusement encore, des parties d'extrémité aval de la chambre de combustion sont enserrées entre des plates-formes d'aubes du distributeur de turbine et des parties d'extrémités des viroles de liaison par des organes de liaison reliant ensembles les viroles de liaison, la chambre de combustion et le distributeur de turbine.

L'invention est applicable aux turbines à gaz ayant une chambre de combustion en CMC ou en matériau métallique réfractaire. De même, les viroles de liaison peuvent être réalisées en matériau métalliques ou, au moins partiellement, en CMC.

### Brève description des dessins

L'invention sera mieux comprise à la lecture de la description faite ci-après, à titre indicatif mais non limitatif, en référence aux dessins annexés sur lesquels :
- la figure 1 est une schématique en demi-coupe axiale montrant une partie de turbine à gaz ;
- les figures 2 et 3 sont des vues partielles en perspective montrant l'assemblage de la partie d'extrémité aval de la chambre de combustion avec le distributeur de turbine HP et les viroles de liaison dans la turbine à gaz de la figure 1, et
- les figures 4 à 6 sont des vues de détail montrant des variantes de réalisation du blocage en rotation du distributeur de turbine HP.

### Description détaillée de modes de réalisation

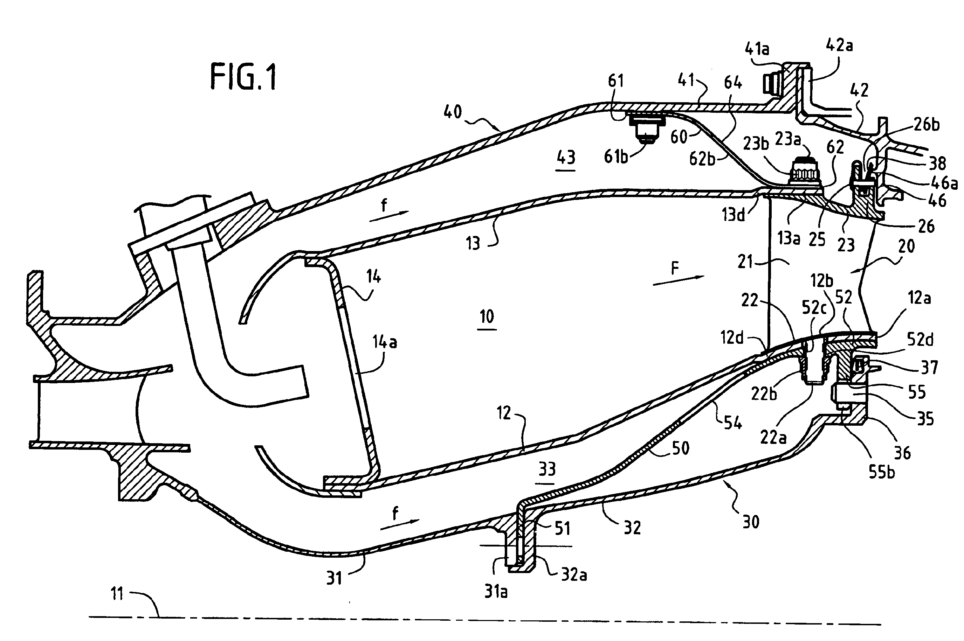

La figure 1 montre en demi-coupe axiale une partie d'une turbine à gaz comprenant une chambre de combustion annulaire 10, un distributeur de turbine haute pression 20 relié mécaniquement à une partie d'extrémité aval de la chambre 10, des enveloppes métalliques annulaires interne 30 et externe 40 et des viroles de liaison 50, 60 maintenant l'ensemble formé par la chambre 10 et le distributeur 20 dans l'espace délimité par les enveloppes 30 et 40.

La chambre de combustion 10 est délimitée par une paroi annulaire interne 12 et une paroi annulaire 13 externe ayant même axe 11 et une paroi de fond amont 14 fixée aux parois 12 et 13. De façon bien connue en soi, la paroi de fond 14 présente une série d'orifices 14a répartis autour de l'axe 11 pour le logement d'injecteurs permettant l'injection de carburant et comburant dans la chambre.

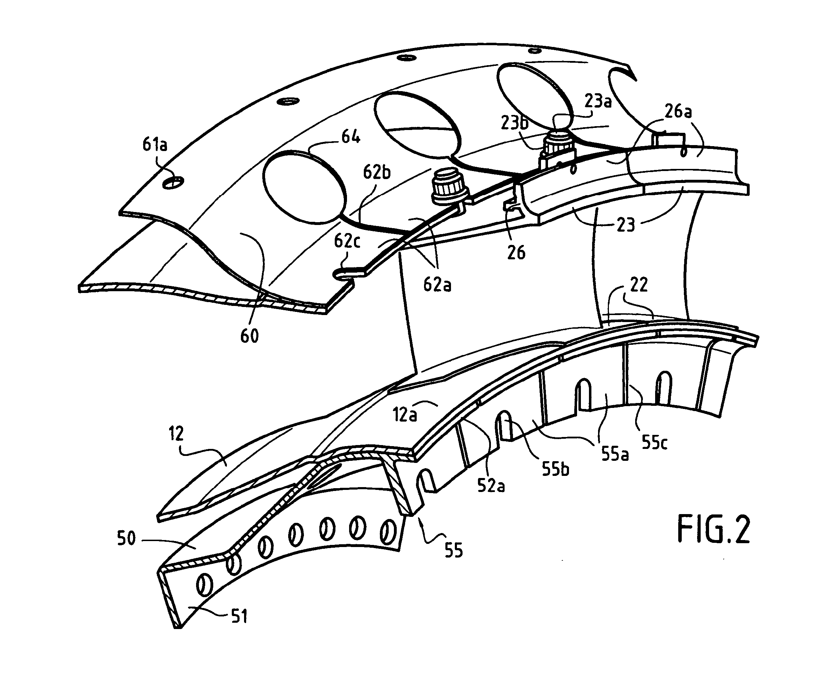

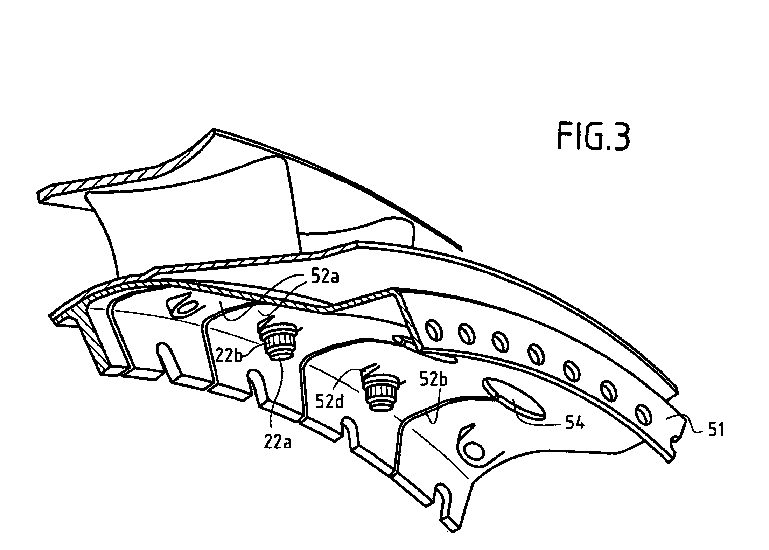

Le distributeur de turbine HP 20, qui constitue l'étape d'entrée de la turbine, comporte une pluralité d'aubes fixes réparties angulairement autour de l'axe 11. Comme le montrent les figures 2 et 3, les aubes comportent des pales 21 solidaires à leurs extrémités de plates-formes internes 22 et externes 23 en forme de secteurs d'anneau juxtaposés. Les faces intérieures des plates-formes 22, 23 définissent la veine d'écoulement de gaz à travers le distributeur. Chaque couple de plates-formes 22, 23 peut être associé à une ou plusieurs pales.

L'enveloppe métallique interne 30 est en deux parties 31, 32 réunies par boulonnage au niveau de brides intérieures respectives 31a, 32a. De même, l'enveloppe métallique 40 externe est en deux parties 41, 42 réunies par boulonnage au niveau de brides extérieures respectives 41a, 42a. L'espace 33 entre la paroi interne 12 de la chambre 10 et l'enveloppe interne 30 et l'espace 43 entre la paroi externe 13 de la chambre 10 et l'enveloppe externe 40 sont parcourus par un flux secondaire d'air de refroidissement (flèches f) contournant la chambre 10.

La virole de liaison interne 50 présente, dans l'exemple illustré, une première extrémité 51 en forme de bride qui est reliée à l'enveloppe interne 30 en étant enserrée entre les brides 31a, 32a et boulonnée avec celle-ci. A son autre extrémité 52, la virole 50 est reliée à la partie d'extrémité aval 12a de la paroi interne 12 de la chambre 10. Sur la partie s'étendant dans l'espace 33, la virole 50 a une forme incurvée avec une section sensiblement en S afin de présenter la souplesse requise pour s'adapter aux dilatations différentielles radiales entre la chambre 10 et l'enveloppe 30 en particulier lorsque la chambre 10 est en CMC.

Dans ce dernier cas notamment, on réalise en outre une sectorisation de la virole 50 en une pluralité de pattes 52a, à partir de son extrémité 52 et sur une certaine distance en direction de son extrémité 51. Cette sectorisation peut être réalisée par des fentes 52b séparant les pattes 52a et s'étendant entre l'extrémité 52 et des trous 54 formés dans la virole 50 et répartis angulairement autour de l'axe 11 pour permettre le passage du flux d'air secondaire dans l'espace 33. Les fentes 52b permettent une adaptation aux dilatations différentielles en direction circonférentielle.

La virole de liaison 60 présente, dans l'exemple illustré, une première extrémité 61 fixée à la paroi intérieure de l'enveloppe externe 40. A cet effet, la virole 60 présente, dans sa partie d'extrémité 61, des trous 61a qui s'engagent sur des tiges filetées réparties angulairement autour de l'axe 11 à la paroi intérieure de l'enveloppe 40 et la liaison est réalisée au moyen d'écrous 61b. A son autre extrémité 62, la virole 60 est reliée à la partie d'extrémité aval 13a de la paroi externe 13 de la chambre 10. Sur la partie s'étendant dans l'espace 43, la virole a une forme incurvée avec une section sensiblement en S afin de présenter la souplesse requise pour s'adapter aux dilatations différentielles entre l'enveloppe 40 et la chambre 10 en particulier lorsque celle-ci est en CMC. Dans ce dernier cas notamment, on réalise en outre une sectorisation de la virole 60 en une pluralité de pattes 62a de façon similaire à celle de la virole 50. Ainsi, des fentes 62b séparant les pattes 62a, sont formées à partir de l'extrémité 62 de la virole et sur une certaine distance en direction de l'extrémité 61, par exemple jusqu'à des trous 64 permettant le passage du flux secondaire dans l'espace 43.

Dans le cas où les parois de la chambre de combustion sont réalisées en matériau métallique réfractaire, une sectorisation des viroles 50 et 60 peut ne pas être nécessaire.

Bien entendu, l'extrémité 61 de la virole 60 pourra être reliée à l'enveloppe 40 au niveau de la liaison entre les brides 41a, 42a, de la même manière que l'extrémité 51 de la virole 50. On pourra aussi relier cette extrémité 51 de la virole 50 à l'enveloppe interne 30 à un autre niveau que celui des brides 31a, 32a.

Tant du côté interne que du côté externe, on utilise avantageusement des mêmes moyens de liaison pour relier mécaniquement les parties d'extrémité aval de la chambre 10, les parties d'extrémité sectorisées des viroles de liaison et les plates-formes du distributeur 20.

Dans l'exemple illustré, les moyens de liaison comportent des tiges filetées 22a qui s'étendent radialement vers l'intérieur à partir des plates-formes 22 et sont solidaires de celles-ci et des tiges filetées 23a qui s'étendent radialement vers l'extérieur à partir des plates-formes 23 et sont solidaires de celles-ci.

La paroi interne 12 de la chambre 10 a sa partie d'extrémité aval 12a qui s'appuie sur la face extérieure des plates-formes 22, sensiblement jusqu'au bord aval de celles-ci. A cet effet, des trous 12b sont formées dans la partie d'extrémité de la chambre pour permettre le passage des tiges filetées 22a. De façon similaire, la partie d'extrémité 52 de la virole 50 vient en appui sur la face extérieure de la partie d'extrémité 12a de la paroi de la chambre, des trous 52c étant formées dans les pattes 52a pour le passage des tiges filetées 22a. La fixation est réalisée par des écrous 22b engagés sur les tiges filetées et serrant ensembles les plates-formes 22, la partie d'extrémité 12 de la chambre et les pattes 52a en s'appuyant sur des bossages 52d formés sur les pattes 52a et traversés par les trous 52c.

La paroi externe 13 de la chambre a sa partie d'extrémité aval 13a qui s'appuie sur une partie de la face extérieure des plates-formes 23, des encoches 13b étant formées dans la partie d'extrémité 13a pour permettre le passage des tiges filetées 23a. La partie d'extrémité 62 de la virole 60 vient en appui sur la face extérieure de la partie d'extrémité 13a de la paroi externe 13 de la chambre, des encoches 62c permettant le montage de la paroi étant formées dans les pattes 62b pour le passage des tiges filetées 23a. Des écrous 23b engagés sur les tiges filetées 23a serrent ensembles les plates-formes 23, la partie d'extrémité 13 de la chambre et les pattes 62a en s'appuyant sur ces dernières.

On notera que la liaison entre chambre 10 et distributeur 20 permet d'obtenir une bonne étanchéité à leur interface. En outre, afin d'assurer une bonne continuité de la veine primaire d'écoulement du flux gazeux issu de la chambre 10 (flèche F), des légers décrochements 12d, 13d sont prévus au niveau du raccordement des parties d'extrémité 12a, 13a avec le reste des parois 12, 13, comme montré sur la figure 1. Ainsi la veine d'écoulement en sortie de chambre peut se raccorder sensiblement sans discontinuité avec la veine d'écoulement dans le distributeur.

Des orifices alignés (non représentés) sont formés dans les plates-formes 22, 23, et communiquent avec des orifices formés dans les parties d'extrémité 12, 13 des parois de la chambre 10 et dans les pattes 52a, 62a des viroles de liaison pour permettre le passage d'air de refroidissement des espaces 33, 43 vers les pales fixes 21 du distributeur 20.

Selon une caractéristique de l'invention, des moyens de blocage sont prévus pour immobiliser le distributeur 20 en rotation sans induire d'efforts circonférentiels ou de cisaillement sur les parties des viroles de liaison 50, 60 s'étendant dans les espaces 33, 43.

Dans le mode de réalisation des figures 1 à 3, les moyens de blocage sont constitués par des doigts 35 qui sont solidaires de l'enveloppe interne 30 et qui pénètrent dans des encoches radiales 55b formées dans une bride 55 solidaire du distributeur 20. Dans l'exemple illustré, les doigts 35 s'étendent axialement et sont répartis angulairement autour de l'axe 11 en étant portés par une bride radiale 36 solidaire de l'enveloppe 30 sensiblement au niveau de l'extrémité aval du distributeur 20. Les doigts 35 peuvent être fixés à la bride 36 par emmanchement à force dans des perçages formés dans la bride 36 ou être soudés à celle-ci. Toujours dans l'exemple illustré, la bride 55 est une bride sectorisée, les secteurs 55a formant cette bride étant solidaires des secteurs 52a de la virole 50, au voisinage de l'extrémité aval de celle-ci, et en aval de la liaison entre la virole 60 et le distributeur 20, de sorte que les secteurs 55a sont bien solidaires des plates-formes internes 22 du distributeur.

On note en outre que l'étanchéité à l'extrémité aval de l'espace 33 est réalisée au moyen d'un joint annulaire 37 de type « oméga » logé dans une rainure de la bride 36 et s'appuyant sur la bride 55, les brides 36 et 55, ayant ainsi une double fonction de support du joint d'étanchéité et de support des moyens de blocage en rotation du distributeur.

En variante, les doigts axiaux de blocage pourront être portés par la bride 55 et pénétrer dans des logements tels que des trous borgnes et oblongs formés dans la bride 36.

Du côté extérieur, l'étanchéité à l'extrémité aval de l'espace 43 est assurée par un joint à lamelles 38 dont la base est maintenue dans un logement annulaire 26b s'ouvrant radialement vers l'extérieur et formée au sommet d'une bride annulaire 26. Celle-ci est formée de secteurs 26a solidaires des plates-formes externes 23 au voisinage de l'extrémité aval du distributeur 20. Le joint 38 est maintenu au moyen de goupilles 25 traversant les ailes bordant le logement 26b et disposées axialement. Le joint 38 s'appuie sur une nervure 46a formée sur une bride radiale 46 solidaire de l'enveloppe 40 au niveau de l'extrémité aval du distributeur 20.

En fonctionnement, les efforts exercés sur les pales 21 du distributeur 20 par le flux gazeux issu dans la chambre 10 sont repris par les doigts 35 via les tiges filetées 22a et la bride 55, aucun effort circonférentiel n'étant imposé aux viroles 50 et 60. Ces dernières n'ont donc pas besoin d'être surdimensionnées. Il est même envisageable de les réaliser en CMC, lorsque la chambre est elle-même en CMC. Une sectorisation des viroles n'est alors plus nécessaire au niveau de la liaison avec la chambre de combustion mais peut être souhaitable au niveau de la liaison avec les enveloppes métalliques interne et externe.

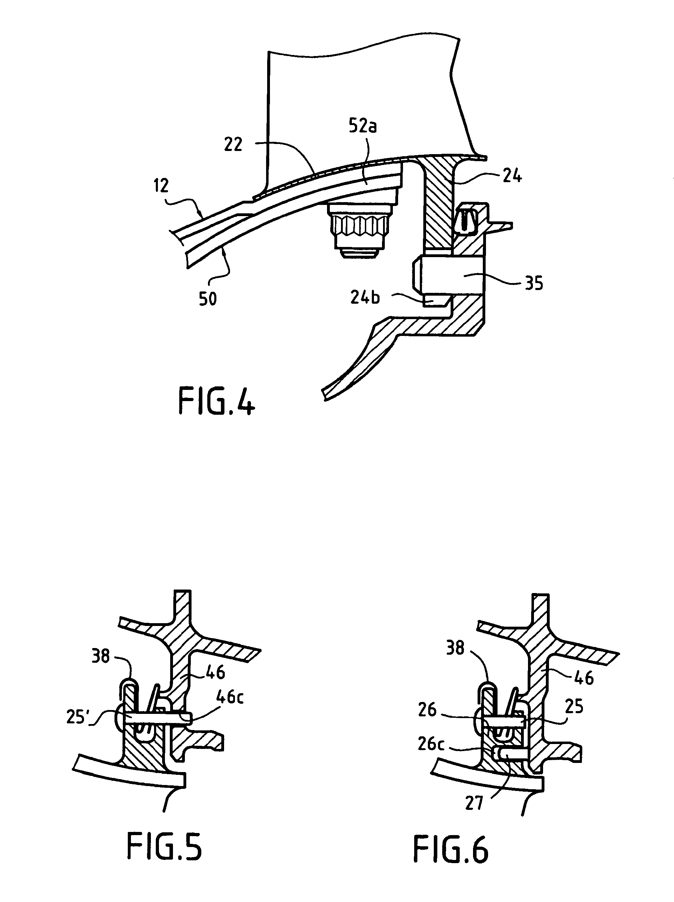

La figure 4 illustre un autre mode de réalisation qui se distingue de celui des figures 1 à 3 en ce que les doigts 35 sont engagés dans des encoches 24b formées dans une bride sectorisée 24 solidaire directement des plates-formes internes 22, une encoche étant formée dans chaque secteur de bride correspondant à une plate-forme interne 22. Dans ce cas, les extrémités aval de la paroi interne 12 de la chambre 10 et des pattes 52a de la virole 50 se situent en retrait de l'extrémité aval du distributeur 20, de la même manière que les extrémités aval de la paroi externe 13 de la chambre 10 et des pattes 62a de la virole 60.

La figure 5 illustre encore un autre mode de réalisation qui se distingue de celui des figures 1 à 3 en ce qu'un blocage en rotation du distributeur 20 est réalisé également au niveau des plates-formes externes 23.

Avantageusement, on utilise à cet effet les goupilles 25' de maintien du joint 38 en prolongeant celles-ci vers l'aval jusqu'à pénétrer dans les trous 46c formés dans la bride 46. Les goupilles 25' pourront éventuellement être surdimensionnées, à savoir avec un diamètre plus élevé en comparaison avec les dimensions suffisantes pour maintenir le joint d'étanchéité 38.

Le mode de réalisation de la figure 5, avec blocage en rotation au niveau des plates-formes internes et externes du distributeur est avantageux en ce qu'il permet de répartir les efforts transmis entre le distributeur et les enveloppes métalliques. Bien entendu, on pourrait adopter, pour le blocage en rotation du distributeur au niveau des plates-formes externes, un montage similaire à celui utilisé dans le mode de réalisation de la figure 4 au niveau des plates-formes internes, à savoir des doigts de blocage 27 portés par la bride 46 et pénétrant dans des trous borgnes et oblongs 26c de la bride 26, comme montré par la figure 6.

## Revendications

1. Turbine à gaz comprenant :
- une chambre de combustion annulaire (10) à paroi en matériau composite à matrice céramique,
- un distributeur de turbine haute pression (20) ayant une pluralité d'aubes fixes réparties autour d'un axe confondu avec celui de la chambre de combustion, le distributeur de turbine étant relié mécaniquement à une partie d'extrémité aval de la chambre de combustion pour former un ensemble avec celle-ci,
- des enveloppes métalliques interne et externe (30,40) entre lesquelles est logé l'ensemble formé par la chambre de combustion et le distributeur de turbine, et
- des viroles de liaison interne et externe souples (50,60) reliant l'ensemble chambre de combustion/distributeur de turbine respectivement aux enveloppes métalliques interne et externe afin de supporter ledit ensemble entre les enveloppes,
**caractérisée en ce que** sont en outre prévus des moyens (35 ;25' ;27) de blocage en rotation du distributeur de turbine (20) autour de son axe par rapport à au moins une des enveloppes métalliques (30,40), pour éviter que les efforts exercés sur les aubes du distributeur de turbine par le flux gazeux issu de la chambre (10) soient repris par les parties des viroles de liaison (50,60) qui s'étendent entre l'ensemble chambre de combustion/ distributeur de turbine et les enveloppes métalliques.

2. Turbine à gaz selon la revendication 1, **caractérisée en ce que** les moyens de blocage comportent des éléments de blocage coopérant avec une partie de paroi (36,46) solidaire d'une enveloppe métallique (30,40) et une bride (55,26 ;24) solidaire du distributeur de turbine.

3. Turbine à gaz selon la revendication 2, **caractérisée en ce que** la partie de paroi solidaire d'une enveloppe métallique est en forme de bride radiale (36,46).

4. Turbine à gaz selon l'une quelconque des revendications 2 et 3, **caractérisée en ce que** les éléments de blocage agissent sur une bride radiale solidaire d'une enveloppe métallique (30,40) et une bride radiale solidaire du distributeur de turbine (20) entre lesquelles est logé un joint d'étanchéité annulaire (37,38).

5. Turbine à gaz selon la revendication 4, **caractérisée en ce que** les éléments de blocage comportent des tiges axiales (25') de retenue du joint d'étanchéité (38).

6. Turbine à gaz selon l'une quelconque des revendications 2 à 5, **caractérisée en ce que** la bride (55) solidaire du distributeur de turbine est portée par une virole de liaison (50) à une extrémité (52) de celle-ci fixée au distributeur de turbine (20).

7. Turbine à gaz selon l'une quelconque des revendications 2 à 5, **caractérisée en ce que** des premiers éléments de blocage (35) sont prévus agissant entre une bride radiale solidaire de l'enveloppe métallique interne et une bride radiale interne solidaire du distributeur de turbine et des seconds éléments de blocage (25') sont prévus agissant entre une bride radiale solidaire de l'enveloppe métallique externe et une bride radiale externe solidaire du distributeur de turbine.

8. Turbine à gaz selon l'une quelconque des revendications 1 à 7, **caractérisée en ce que** des parties d'extrémité aval (12a, 13a) de la chambre de combustion (10) sont enserrées entre des plates-formes (22,23) d'aubes du distributeur de turbine et des parties d'extrémités (52a, 62a) des viroles de liaison par des organes de liaison (22a-22b, 23a-23b) reliant ensembles les viroles de liaison, la chambre de combustion et le distributeur de turbine.

9. Turbine à gaz selon l'une quelconque des revendications 1 à 8, **caractérisée en ce que** les viroles de liaison sont réalisées au moins en partie en matériau composite à matrice céramique.

## Claims

1. A gas turbine comprising:
- an annular combustion chamber (10) having a wall made of ceramic matrix composite material;
- a high pressure turbine nozzle (20) having a plurality of stationary vanes distributed around an axis coinciding with the axis of the combustion chamber, the turbine nozzle being mechanically connected to a downstream end portion of the combustion chamber so as to form an assembly together therewith;
- inner and outer metal shrouds (30, 40) between which the assembly constituted by the combustion chamber and the turbine nozzle is housed; and
- flexible inner and outer connection ferrules (50, 60) connecting the combustion chamber and turbine nozzle assembly respectively to the inner and outer metal shrouds so as to support said assembly between the shrouds;
the turbine being **characterised in that** blocking means (35; 25'; 27) are also provided for preventing the turbine nozzle (20) from turning about its own axis relative to at least one of the metal shrouds (30, 40) so as to avoid the forces that are exerted on the turbine nozzle vanes by the flow of gas from the chamber (10) being taken up by the portions of the connection ferrules (50, 60) that extend between the combustion chamber and turbine nozzle assembly and the metal shrouds.

2. A gas turbine according to claim 1, **characterised in that** the blocking means comprise locking members co-operating with a wall portion (36, 46) secured to a metal shroud (30, 40), and a flange (55, 26; 24) secured to the turbine nozzle.

3. A gas turbine according to claim 2, **characterised in that** the wall portion secured to the metal shroud is in the form of a radial flange (36, 46).

4. A gas turbine according to claim 2 or claim 3, **characterised in that** the locking members act on a radial flange secured to a metal shroud (30, 40) and a radial flange secured to the turbine nozzle (20) between which there is housed an annular sealing gasket (37, 38).

5. A gas turbine according to claim 4, **characterised in that** the locking members comprise axial rods (25') for retaining the sealing gasket (38).

6. A gas turbine according to any one of claims 2 to 5, **characterised in that** the flange (55) secured to the turbine nozzle is carried by a connection ferrule (50) at an end (52) thereof that is fastened to the turbine nozzle (20).

7. A gas turbine according to any one of claims 2 to 5, **characterised in that** first locking members (35) are provided acting between a radial flange secured to the inner metal shroud and an inner radial flange secured to the turbine nozzle, and second locking members (25') are provided acting between a radial flange secured to the outer metal shroud and an outer radial flange secured to the turbine nozzle.

8. A gas turbine according to any one of claims 1 to 7, **characterised in that** downstream end portions (12a, 13a) of the combustion chamber (10) are clamped between platforms (22, 23) of the turbine nozzle vanes and end portions (52a, 62a) of the connection ferrules by fastener members (22a-22b, 23a-23b) connecting together the connection ferrules, the combustion chamber, and the turbine nozzle.

9. A gas turbine according to any one of claims 1 to 8, **characterised in that** the connection ferrules are made at least in part out of a ceramic matrix composite material.

## Patentansprüche

1. Gasturbine umfassend:
- eine ringförmige Brennkammer (10) mit einer Wand aus einem Keramikmatrix-Verbundwerkstoff,
- ein Hochdruckturbinenleitrad (20) mit einer Vielzahl von Leitschaufeln, die um eine mit der Achse der Brennkammer zusammenfallende Achse verteilt sind, wobei das Turbinenleitrad mit einem stromabwärtigen Endteil der Brennkammer mechanisch verbunden ist, um mit dieser eine Einheit zu bilden,
- einen inneren und einen äußeren Metallmantel (30, 40), zwischen denen die durch die Brennkammer und das Turbinenleitrad gebildete Einheit gelagert ist, sowie
- einen flexiblen inneren und einen flexiblen äußeren Verbindungsring (50, 60), welche die Einheit aus Brennkammer und Turbinenleitrad jeweils mit dem inneren und dem äußeren Metallmantel verbinden, um die genannte Einheit zwischen den Mänteln abzustützen,
**dadurch gekennzeichnet, daß** ferner Mittel (35; 25'; 27) vorgesehen sind, um das Turbinenleitrad (20) gegen ein Drehen um seine Achse gegenüber wenigstens einem der Metallmäntel (30, 40) festzulegen, um zu vermeiden, daß die durch den aus der Kammer (10) austretenden Gasstrom auf die Schaufeln des Turbinenleitrades ausgeübten Kräfte durch die Teile der Verbindungsringe (50, 60) aufgenommen werden, die sich zwischen der Einheit aus Brennkammer und Turbinenleitrad und den Metallmänteln erstrecken.

2. Gasturbine nach Anspruch 1, **dadurch gekennzeichnet, daß** die Festlegungsmittel Festlegungselemente umfassen, die mit einem Wandteil (36, 46), der fest mit einem Metallmantel (30, 40) verbunden ist, sowie mit einem Flansch (55, 26; 24), der fest mit dem Turbinenleitrad verbunden ist, zusammenwirken.

3. Gasturbine nach Anspruch 2, **dadurch gekennzeichnet, daß** der mit einem Metallmantel fest verbundene Wandteil in Form eines radialen Flansches (36, 46) vorliegt.

4. Gasturbine nach irgendeinem der Ansprüche 2 und 3, **dadurch gekennzeichnet, daß** die Festlegungselemente auf einen mit einem Metallmantel (30, 40) fest verbundenen radialen Flansch und einen mit dem Turbinenleitrad (20) fest verbundenen radialen Flansch wirken, zwischen denen eine ringförmige Dichtung (37, 38) gelagert ist.

5. Gasturbine nach Anspruch 4, **dadurch gekennzeichnet, daß** die Festlegungselemente axiale Stifte (25') zum Halten der Dichtung (38) umfassen.

6. Gasturbine nach irgendeinem der Ansprüche 2 bis 5, **dadurch gekennzeichnet, daß** der mit dem Turbinenleitrad fest verbundene Flansch (55) von einem Verbindungsring (50) an einem Ende (52) dessen, das an dem Turbinenleitrad (20) befestigt ist, getragen wird.

7. Gasturbine nach irgendeinem der Ansprüche 2 bis 5, **dadurch gekennzeichnet, daß** erste Festlegungselemente (35) vorgesehen sind, die zwischen einem mit dem inneren Metallmantel fest verbundenen radialen Flansch und einem mit dem Turbinenleitrad fest verbundenen radialen inneren Flansch wirken, und daß zweite Festlegungselemente (25') vorgesehen sind, die zwischen einem mit dem äußeren Metallmantel fest verbundenen radialen Flansch und einem mit dem Turbinenleitrad fest verbundenen radialen äußeren Flansch wirken.

8. Gasturbine nach irgendeinem der Ansprüche 1 bis 7, **dadurch gekennzeichnet, daß** stromabwärtige Endteile (12a, 13a) der Brennkammer (10) zwischen Plattformen (22, 23) von Schaufeln des Turbinenleitrades und Endteilen (52a, 62a) der Verbindungsringe durch Verbindungsorgane (22a-22b, 23a-23b) festgeklemmt sind, welche die Verbindungsringe, die Brennkammer und das Turbinenleitrad miteinander verbinden.

9. Gasturbine nach irgendeinem der Ansprüche 1 bis 8, **dadurch gekennzeichnet, daß** die Verbindungsringe wenigstens teilweise aus einem Keramikmatrix-Verbundwerkstoff gefertigt sind.
